# EUROPÄISCHE PATENTSCHRIFT

(11) **EP 2 426 617 B1**
(45) Veröffentlichungstag und Bekanntmachung des Hinweises auf die Patenterteilung: **07.08.2019**
(21) Anmeldenummer: 11178376.7
(22) Anmeldetag: 23.08.2011
(51) Int. Cl.: G06F 21/62

(54) **Verfahren zum anonymen Zusammenführen von vertraulichen Daten und zugehörigen Identifizierungsdaten**
Method for anonymous compiling of confidential data and accompanying identification data
Procédé de collecte anonyme de données confidentielles et données d'identification associées

(30) Priorität: 03.09.2010 DE 102010037326
(43) Veröffentlichungstag der Anmeldung: 07.03.2012
(73) Patentinhaber: Hüffer, Wolfgang, 33378 Rheda-Wiedenbrück (DE); Wiese, Timo, 33719 Bielefeld (DE)
(72) Erfinder: Hüffer, Wolfgang, 33378 Rheda-Wiedenbrück (DE); Wiese, Timo, 33719 Bielefeld (DE)
(74) Vertreter: Ter Meer Steinmeister & Partner

(56) Entgegenhaltungen:
- EP-A2- 1 026 603
- WO-A1-01/18631
- POMMERENING KLAUS ET AL: "Secondary use of the EHR via pseudonymisation", STUDIES IN HEALTH TECHNOLOGY AND INFORMATICS, I O S PRESS, AMSTERDAM, NL, Bd. 103, 1. Januar 2004 (2004-01-01), Seiten 441-446, XP002488507, ISSN: 0926-9630

## Beschreibung

Die Erfindung betrifft ein Verfahren zum anonymen Zusammenführen von vertraulichen Daten und zugehörigen Identifizierungsdaten von Personen, bei dem je Datensatz die folgenden Schritte ausgeführt werden:
- auf Seiten eines Benutzers;
   - Umwandeln der Identifizierungsdaten in eine erste Datensatzkennung und
   - übermitteln der ersten Datensatzkennung zusammen mit den vertraulichen Daten an eine Treuhandstelle,
- auf Seiten der Treuhandstelle:
   - umschlüsseln der ersten Datensatzkennung mit einem symmetrischen Schlüssel in eine zweite Datensatzkennung und
- übermitteln der zweiten Datensatzkennung zusammen mit den vertraulichen Daten an eine Merkmalsdatenbank.

Im Geschäftsleben und in der öffentlichen Verwaltung besteht häufig das Erfordernis, Datenbanken zu unterhalten, in denen neben Identifizierungsdaten von Personen, beispielsweise von Kunden oder Bürgern, auch vertrauliche Merkmalsdaten gespeichert sind, etwa Daten über Alter, Kaufverhalten, besondere Vorlieben, Kreditwürdigkeit, Krankheiten, Vorstrafen etc. der betroffenen Personen. Angesichts zunehmend strengerer Datenschutzbestimmungen erfordert es ständig steigende Kosten, einen verantwortungsbewusstenUmgang mit diesen Daten sicherzustellen, beispielsweise durch Begrenzung des Zugangs zu den Datenbanken, Sicherheitsüberprüfung und -schulung des zugangsberechtigten Personals, und dergleichen.

Aus WO 2006/015100 A2 ist ein Verfahren zur sicheren Speicherung von Identifizierungs- und Merkmalsdaten von Personen bekannt, das die eingangs genannten Schritte umfasst.

Aus POMMERENING, KLAUS ET AL: "Secondary use of the EHR via pseudonymisation", STUDIES IN HEALTH TECHNOLOGY AND INFORMATICS, I O S PRESS, AMSTERDAM, NL, Bd. 103, 1. Januar 2004, (2004-01-01), Seiten 441 - 446, XP002488507, ISSN: 0926-9630 ist ein Verfahren der eingangs genannten Art bekannt, bei dem Daten aus verschiedenen Quellen zusammengeführt werden.

Ein wesentlicher Vorteil dieses Verfahrens besteht darin, dass auf Seiten des Benutzers auf eine Speicherung der Identifizierungsdaten und der jeweils zugehörigen vertraulichen Merkmalsdaten in einer gemeinsamen Datenbank verzichtet werden kann. Statt dessen werden die Merkmalsdaten zusammen mit der ersten Datensatzkennung an eine Treuhandstelle übermittelt, die dann die erste Datensatzkennung in eine zweite Datensatzkennung umschlüsselt und diese zusammen mit den vertraulichen Daten an eine Datenbank weiterleitet. Diese Datenbank kann sich wieder im Verfügungsbereich des Benutzers befinden, oder es kann sich um eine Datenbank eines externen Dienstleisters handeln, beispielsweise eines Unternehmens, das Marketinganalysen durchführt. Wesentlich ist dabei, dass es sich bei der Treuhandstelle, die auch als "Trusted Third Party" (TTP) bezeichnet wird, um eine von dem oder den Benutzern und dem Betreiber der Datenbank rechtlich und physisch getrennte Institution handelt, beispielsweise ein eigenständiges Unternehmen mit einem allein unter seiner Kontrolle stehenden Datenverarbeitungssystem zur Umschlüsselung der Daten. Dadurch ist gewährleistet, dass für jemanden, der Zugang zu der Datenbank hat, zwar noch erkennbar ist, welche Merkmalsdaten zu welcher (zweiten) Datensatzkennung gehören, doch ist diese zweite Datensatzkennung durch die Umschlüsselung anonymisiert, so dass sie keinen Rückschluss auf die Identität der Personen erlaubt, auf die sich die gespeicherten Merkmale beziehen. So kann diese Datenbank beispielsweise für statistische Analysen benutzt werden, ohne dass besondere Geheimhaltungsvorkehrungen erforderlich sind. Aufgrund der in der Treuhandstelle vorgenommenen Umschlüsselung sind die Personen in der Datenbank nicht einmal für den Benutzer identifizierbar, der die Daten ursprünglich geliefert hat.

Nachteilig ist bei dem bekannten Verfahren jedoch, dass in der Merkmalsdatenbank nicht erkennbar ist, ob Daten, die von verschiedenen Benutzern geliefert wurden, sich auf dieselbe Person beziehen. Dasselbe gilt auch für Datensätze, die von demselben Benutzer geliefert wurden, bei denen sich jedoch die Identifizierungsdaten aufgrund von Schreibfehlern oder dergleichen leicht unterscheiden. Weiterhin wird die Effizienz der Merkmalsanalyse dadurch eingeschränkt, dass anhand der in der Merkmalsdatenbank zur Verfügung stehenden Datensatzkennungen nicht feststellbar ist, ob zwischen zwei oder mehr Personen irgendwelche Beziehungen bestehen, beispielsweise ob sie demselben Haushalt oder derselben Personengruppe angehören.

EP 1 026 603 A2 beschreibt ein Verfahren, bei dem die Identifizierungsdaten in der Treuhandstelle in anonyme Kennungen umgewandelt und an den Benutzer zurück gemeldet werden, der sie dann mit den vertraulichen Merkmalsdaten verknüpft.

Aufgabe der Erfindung ist es, das Verfahren dahingehend zu verbessern, dass eine effizientere Datenanalyse ermöglicht wird.

Diese Aufgabe wird dadurch gelöst, dass die Identifizierungsdaten auch in einer Verknüpfungsdatenbank gespeichert werden, zusammen mit Verknüpfungsdaten, die Beziehungen zwischen Identifizierungsdaten aus verschiedenen Datensätzen angeben, einschließlich Verknüpfungsdaten, die angeben, dass die von einander verschiedenen Identifizierungsdaten zweier verschiedener Datensätze dieselbe Person betreffen, oder die angeben, dass zwischen den zu verschiedenen Datensätzen gehörenden Personen eine bestimmte Beziehung besteht, und dass zusätzlich die folgenden Schritte ausgeführt werden:
- auf Seiten der Verknüpfungsdatenbank:
   - Umwandeln der Identifizierungsdaten in eine dritte Datensatzkennung, derart, dass dritte Datensatzkennung implizit die erste Datensatzkennung für dieselben Identifizierungsdaten enthält, und
   - übermitteln der dritten Datensatzkennung zusammen mit den Verknüpfungsdaten an die Treuhandstelle ,
- auf Seiten der Treuhandstelle:
   - umschlüsseln der dritten Datensatzkennung in die zweite Datensatzkennung und
   - übermitteln der zweiten Datensatzkennung zusammen mit den Verknüpfungsdaten an die Merkmalsdatenbank.

Auf diese Weise ist es möglich, in der Merkmalsdatenbank auch Identitäten oder sonstige Beziehungen zwischen den durch die Datensatzkennungen repräsentierten Personen (oder Objekten) verfügbar zu machen und für die Analyse zu nutzen und dennoch die Anonymität zu wahren.

Da die Verknüpfungsdatenbank nur die Identifizierungsdaten aber nicht die zugehörigen Merkmalsdaten enthält, lässt sich ein Datenmissbrauch auch bei Zugriff auf die Verknüpfungsdatenbank vermeiden.

Bei den Identifizierungsdaten kann es sich beispielsweise um die Namen, die Adressen, E-Mail-Adressen, Festnetz- oder Mobiltelefonnummern oder allgemein um Daten handeln, die zur Identifizierung von Personen (oder Objekten) beitragen können. Ein Datensatz für eine Person oder ein Objekt kann folglich auch mehrere Felder mit Identifizierungsdaten enthalten, beispielsweise Name, Anschrift, E-Mail-Adresse, etc.. Der Inhalt jedes dieser Datenfelder kann dann in eine eigene "erste" Datensatzkennung umgewandelt werden, und entsprechend wird dann auch jeder Datensatz in der Merkmalsdatenbank mehrere Identifizierungsfelder enthalten, in denen die "zweiten" Datensatzkennungen für die verschiedenen Datentypen abgelegt sind.

Das Verfahren kann mittels geeigneter Software auf herkömmlichen Arbeitsplatzrechnern, Servern und sonstigen Datenverarbeitungssystemen ausgeführt werden, die auf elektronischem Wege miteinander kommunizieren, beispielsweise über das Internet.

Vorteilhafte Ausgestaltungen und Weiterbildungen des Verfahrens wird in den Unteransprüchen angegeben.

Für die Erzeugung der ersten und dritten Datensatzkennungen wird vorzugsweise eine Einweg-Verschlüsselung angewandt, beispielsweise in der Form eines sicheren Hash-Algorithmus, so dass zwar identische Identifizierungsdaten auch identische Kennungen liefern, es jedoch nicht möglich ist, aus der Datensatzkennung wieder die zugehörigen Identifizierungsdaten zu rekonstruieren.

Im einfachsten Fall kann auf Seiten des Benutzers und auf Seiten der Verknüpfungsdatenbank derselbe Algorithmus verwendet werden, so dass man für gleiche Identifizierungsdaten auch dieselbe Kennung erhält. Um einen Missbrauch weiter zu erschweren, ist es jedoch zweckmäßig, dem Benutzer einerseits und der Verknüpfungsdatenbank andererseits unterschiedliche Kreise von Datensatzkennungen zuzuordnen, so dass auch für identische Identifizierungsdaten die erste Datensatzkennung von der dritten Datensatzkennung verschieden ist. Allerdings muss es dann möglich sein, aus der dritten Datensatzkennung auf die zugehörige erste Datensatzkennung zurückzuschließen (jedoch nicht auf die zugehörigen Identifizierungsdaten), damit später in der Merkmalsdatenbank festgestellt werden kann, auf welche (zweiten) Datensatzkennungen sich die von der Verknüpfungsdatenbank gelieferten Verknüpfungsdaten beziehen. Vorzugsweise werden die erste Datensatzkennung und die dritte Datensatzkennung in diesem Fall schon in der Treuhandstelle in dieselbe zweite Datensatzkennung umgeschlüsselt. In einer alternativen Ausführungsform kann die Umschlüsselung jedoch auch so erfolgen, dass zunächst verschiedene zweite Datensatzkennungen erzeugt werden, die aber in der Merkmalsdatenbank als zur gleichen Person gehörend erkannt werden können.

Wenn sich zwei oder mehr Benutzer an dem Verfahren beteiligen, erhält vorzugsweise auch jeder Benutzer einen anderen Kreis von ersten Datensatzkennungen. Auch wenn die von mehreren Benutzern gelieferten Daten abgehört und zusammengeführt werden, ist es daher nicht möglich, Übereinstimmungen zwischen den Datensatzkennungen der verschiedenen Benutzer festzustellen und daraus Rückschlüsse auf die Identität der Personen zu ziehen. In der Merkmalsdatenbank ist zwar erkennbar, dass sich die von verschiedenen Benutzern gelieferten Merkmale auf dieselbe Person beziehen, doch ist hier nicht bekannt, welcher Benutzer die betreffenden Daten geliefert hat. Diese Information ist nur in der vertrauenswürdigen Treuhandstelle vorhanden.

Das Ziel der Datenanalyse in der Merkmalsdatenbank wird häufig darin bestehen, eine Personengruppe zu identifizieren, die bestimmte Merkmalskriterien erfüllt, beispielsweise mögliche Adressaten für eine Werbekampagne. Wenn das Ergebnis dieser Analyse für die Benutzer oder für Dritte zugänglich gemacht werden soll, so kann die Merkmalsdatenbank die zweiten Datensatzkennungen der ermittelten Personen an die Treuhandstelle übermitteln, die diese wieder umschlüsselt und - immer noch in anonymisierter Form - an eine Adressdatenbank weiterleitet, zusammen mit Informationen, die die Feststellung der zugehörigen Klaradressen (jedoch nicht der zugehörigen Merkmale) ermöglicht. Die Benutzer oder interessierte Dritte können dann die entsprechenden Adressen von der Adressdatenbank abrufen. Dabei ist es zweckmäßig, wenn die Adressdatenbank mit der Verknüpfungsdatenbank identisch ist. Da in der Verknüpfungsdatenbank die ersten Datensatzkennungen für alle erfassten Personen verfügbar sind, lässt sich dort die Identität der Adressaten feststellen, indem die ersten Datensatzkennungen mit den von der Merkmalsdatenbank gelieferten und wieder umgeschlüsselten Kennungen abgeglichen werden. Die so erstellte Adressenliste wird im allgemeinen auf der Analyse von Merkmalen beruhen, die von mehreren Benutzern mitgeteilt wurden. Das Verfahren stellt jedoch sicher, dass die Benutzer zwar die gewünschten Adressenlisten erhalten, aber keine explizite Information über Merkmale, die von anderen Benutzern beigesteuert wurden.

In der Praxis werden die Identifizierungsdaten häufig die Adresse der betreffenden Person umfassen. In dem Fall muss die Adresseninformation nicht zwingend von den Benutzern bereitgestellt werden, sondern sie kann auch von einer weiteren unabhängigen Instanz bereitgestellt werden, die die Adressen eines ganzen Landes oder einer Region zusammen mit eindeutigen Kennungen speichert, jedoch ohne die Namen der Personen, die unter diesen Adressen zu erreichen sind. Auf Seiten des Benutzers werden dann beispielsweise in einer Kundendatei anstelle der Namen und vollständigen Anschriften der Kunden nur die Namen und die Adressenkennungen gespeichert. Die an die Treuhandstelle übermittelten Identifizierungsdaten können in diesem Fall aus einer (verhashten) Personenkennung und der (vorzugsweise verschlüsselten) Adressenkennung bestehen. Ein solches Verfahren zur getrennten Speicherung von Namen und Adressen wird in DE 10 2009 009 276 A1 beschrieben.

Vorzugsweise erfolgt der Datenverkehr zwischen dem Benutzer, der Verknüpfungsdatenbank, der Treuhandstelle und der Merkmalsdatenbank über sichere Kanäle und/oder in verschlüsselter Form. Für die Ver- und Entschlüsselung der ersten, zweiten und dritten Datensatzkennungen wird aus Effizienzgründen vorzugsweise ein symmetrischer Schlüssel verwendet. Vorzugsweise wird für jede Datenübermittlung nach dem Zufallsprinzip ein neuer symmetrischer Schlüssel generiert. Für die Übermittlung dieser symmetrischen Schlüssel an die Treuhandstelle kann dann der Schlüssel noch einmal nach einem asymmetrischen Verfahren mit öffentlichem und privatem Schlüssel verschlüsselt werden.

Im folgenden werden Ausführungsbeispiele der Erfindung anhand der Zeichnung näher erläutert.

Es zeigen:
- Fig. 1: ein Blockdiagramm eines Datenbanksystems zur Ausführung des erfindungsgemäßen Verfahrens;
- Fig. 2: ein Flussdiagramm zur Erläuterung der wesentlichen Schritte eines Verfahrens zur Speicherung von Daten;
- Fig. 3: ein Beispiel für die Generierung von ersten und zweiten Datensatzkennungen;
- Fig. 4: ein Beispiel einer Verknüfpungsdatenbank;
- Fig. 5: ein Flussdiagramm zur Erläuterung der wesentlichen Schritte eines Verfahrens zur Speicherung von Verknüfungsdaten;
- Fig. 6: ein Flussdiagramm zur Erläuterung der wesentlichen Schritte eines Verfahrens zur Verfügbarmachung des Ergebnisses einer Merkmalsanalyse; und
- Fig. 7: ein Blockdiagramm eines Verfahrens zur Verschlüsselung der Daten bei dem erfindungsgemäßen Verfahren.

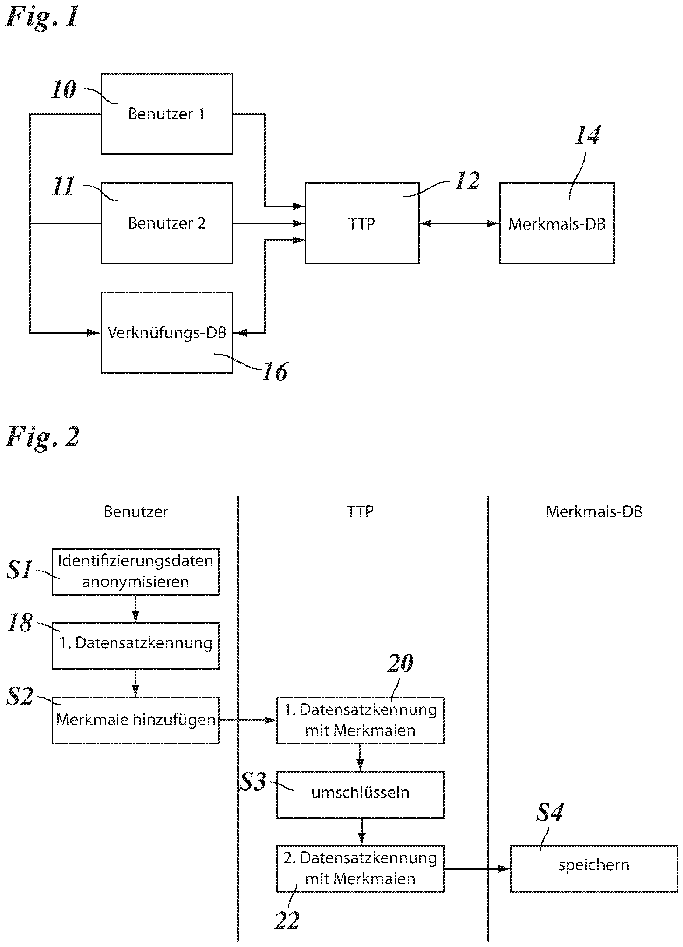

In Fig. 1 sind als Blockdiagramm verschiedene Institutionen dargestellt, die beispielsweise über das Internet miteinander kommunizieren, nämlich zwei Benutzer 10, 11, eine Treuhandstelle 12 (TTP), eine Merkmalsdatenbank 14 und eine Verknüpfungsdatenbank 16, die hier zugleich eine Adressdatenbank bildet. Im allgemeinen wird es sich bei diesen Institutionen um verschiedene öffentlich- oder privatrechtliche Körperschaften handeln, beispielsweise um unterschiedliche Firmen, unterschiedliche Behörden und dergleichen. Die Merkmalsdatenbank 14 kann beispielsweise von einem Dienstleistungsunternehmen unterhalten werden, das statistische Analysen und Marketinganalysen für die Benutzer 10, 11 oder allgemein für eine Vielzahl von Benutzern oder interessierte Dritte ausführt. Wahlweise kann die Merkmalsdatenbank 14 auch direkt von einem der Benutzer 10, 11 unterhalten werden.

Die Verknüpfungsdatenbank 16 kann von einem anderen Dienstleistungsunternehmen unterhalten werden, das die Adressenverwaltung für einen oder mehrere Benutzer 10, 11 übernimmt, wie in DE 10 2009 009 276 beschrieben wird. Wahlweise kann die Verknüpfungsdatenbank 16 jedoch auch in eine Kundendatenbank oder eine sonstige Personendatenbank eines Benutzers oder eines Dritten integriert sein.

Die Treuhandstelle 12 sollte hingegen sowohl rechtlich wie auch physisch von den übrigen Institutionen getrennt sein. Rechtliche Trennung bedeutet hier, dass Beteiligte, die Verfügungsgewalt über Datenverarbeitungseinrichtungen des Benutzers 10 oder 11, über die Merkmalsdatenbank 14 und/oder die Verknüpfungsdatenbank 16 haben, nicht automatisch auch Verfügungsgewalt über die Datenverarbeitungseinrichtungen und den Datenbestand der Treuhandstelle 12 haben und umgekehrt. Physische Selbständigkeit bedeutet, dass die Datenträger der Treuhandstelle 12 physikalisch getrennt sind von Datenträgern der Benutzers 10, 11 und den Datenträgern, auf denen sich die Verknüpfungsdatenbank 16 und insbesondere die Merkmalsdatenbank 14 befinden. Insbesondere ist damit sichergestellt, dass jemand, der die Merkmalsdatenbank 14 in seinen Besitz bringt, nicht automatisch Zugang zu den Daten der Treuhandstelle 12 hat.

Fig. 2 illustriert die wesentlichen Schritte eines Verfahrens, mit dem ein oder mehrere Benutzer 10, 11 vertrauliche Daten über verschiedene Personen dem Betreiber der Merkmalsdatenbank 14 zur Verfügung stellen können, und zwar in einer Weise, bei der die Anonymität der Merkmalsträger gewahrt wird. Dabei wird davon ausgegangen, dass der Benutzer über Identifizierungsdaten verfügt, die bestimmte Personen, z.B. Kunden, identifizieren (z.B. Name und Adresse), und außerdem Kenntnisse über bestimmte Merkmale dieser Personen besitzt. Diese Kenntnisse sollen nun dem Betreiber der Merkmalsdatenbank 14 zur Verfügung gestellt werden, damit dieser die Daten einer statistischen Analyse unterziehen kann und beispielsweise Empfehlungen für verbesserte Marketingstrategien erstellen kann.

In einem ersten Schritt S1 in Fig. 2 werden auf Seiten des Benutzers die Identifizierungsdaten für eine Person oder ggf. auch für mehrere Personen anonymisiert. Die Identifizierungsdaten können beispielsweise aus einer von dem Benutzer unterhaltenen Kundendatenbank oder dergleichen abgerufen werden und umfassen jeweils mindestens den Namen der betreffenden Person und zumeist auch dessen Adresse oder zumindest eine Adressenkennung, für welche dann die zugehörige Klaradresse in der Verknüpfungsdatenbank 16 oder einer separaten Adressdatenbank abgerufen werden kann.

Die Anonymisierung erfolgt auf einem Rechner des Benutzers, auf dem eine geeignete Software für die Anonymisierung implementiert ist. Wahlweise kann die Anonymisierung auch auf einem externen Rechner eines Dienstanbieters (Application Service Provider; ASP) erfolgen, dem die Identifizierungsdaten über einen sicheren Kanal über das Internet zugeführt werden und der seinerseits die anonymisierten Daten an den Rechner des Benutzers zurück übermittelt. Das Ergebnis dieser Anonymisierung ist in jedem Fall ein bestimmter Code, der hier als "erste Datensatzkennung" 18 bezeichnet wird. Beispielsweise kann es sich bei der ersten Datensatzkennung 18 um eine Hash-ID handeln, die man gewinnt, indem die Identifizierungsdaten zunächst standardisiert und dann nach einem bekannten Algorithmus "verhasht" werden. In diesem Fall lassen sich aus der Hash-ID die ursprünglichen Identifizierungsdaten nicht wieder zurückgewinnen, und es ist lediglich sichergestellt, dass von einer Identität der Hash-IDs auf eine Identität der Personen geschlossen werden kann (Einweg-Verschlüsselung). In einem anderen Ausführungsbeispiel kann die Anonymisierung jedoch auch durch eine geeignete Verschlüsselung erfolgen, so dass sich durch Entschlüsselung der ersten Datensatzkennung 18 die ursprünglichen Identifizierungsdaten zurückgewinnen lassen.

In einem Schritt S2 werden dann zu der Datensatzkennung 18 die vertraulich zu behandelnden Merkmale der betreffenden Person hinzugefügt, und die erste Datensatzkennung wird zusammen mit den hinzugefügten Merkmalen an die Treuhandstelle 12 übermittelt. Die Treuhandstelle 12 empfängt somit einen Datensatz 20, der die erste Datensatzkennung und, verschlüsselt oder unverschlüsselt, die zugehörigen Merkmale enthält.

In einem Schritt S3 wird dann auf Seiten der Treuhandstelle 12 die in dem Datensatz 20 enthaltene erste Datensatzkennung 18 mit Hilfe eines symmetrischen, nur der Treuhandstelle bekannten Schlüssels in eine zweite Datensatzkennung umgeschlüsselt. Das Ergebnis ist ein Datensatz 22, der die zweite Datensatzkennung und die zugehörigen Merkmale enthält. Dieser Datensatz wird dann an den Betreiber der Merkmalsdatenbank 14 übermittelt und in einem Schritt S4 in dieser Datenbank gespeichert. Sofern es sich bei den in der Merkmalsdatenbank 14 gespeicherten vertraulichen Merkmalen um Merkmale von Personen handelt, ist die Merkmalsdatenbank somit eine anonymisierte Datenbank, die zwar noch erkennen lässt, dass bestimmte Merkmale zu ein und derselben Person gehören, jedoch die Identität dieser Person nicht mehr erkennen lässt. Dadurch wird einem Missbrauch der vertraulichen Merkmalsdaten vorgebeugt.

Das beschriebene Verfahren lässt sich durch Einsatz von elektronischen Datenverarbeitungssystemen und geeigneter Software praktisch vollständig automatisieren. Beispielsweise wird dazu auf Seiten der Treuhandstelle 12 ein Server unterhalten, der die von den Benutzern gelieferten Daten automatisch empfängt, umschlüsselt und an die Merkmalsdatenbank weiterleitet. Auf Seiten des Benutzers 10 wird durch die bereitgestellte Software beispielsweise eine Eingabemaske erzeugt, in die der Benutzer die Identifizierungsdaten und die zugehörigen Merkmale eingibt. Auf einen entsprechenden Befehl des Benutzers (Mausklick) erfolgt dann automatisch die Anonymisierung (Schritt S1) und die Übermittlung des Datensatzes 20 an die Treuhandstelle. Die Software auf Seiten des Benutzers ist dabei vorzugsweise so beschaffen, dass keine dauerhafte Speicherung der Identifizierungsdaten zusammen mit den zugehörigen Merkmalen erfolgt.

Wenn mehrere Benutzer 10, 11 mit derselben Treuhandstelle 12 zusammenarbeiten und ggf. Daten zu einer gemeinsamen Merkmalsdatenbank 14 beisteuern, so sollte jedem Benutzer eine benutzerspezifische Software zur Verfügung gestellt werden, die sicherstellt, dass zwei verschiedene Benutzer keinesfalls identische erste Datensatzkennungen 18 erzeugen (auch dann nicht, wenn sich die Daten tatsächlich auf dieselbe Person beziehen). Das lässt sich beispielsweise dadurch erreichen, dass jedem Benutzer ein anderer Kreis von möglichen ersten Datensatzkennungen 18 zugewiesen wird. Wenn in diesem Fall zwei verschiedene Benutzer Merkmalsdaten über ein und dieselbe Person beisteuern, so werden zwar die ersten Datensatzkennungen der beiden Benutzer voneinander verschieden sein, doch werden beide Kennungen dann von der Treuhandstelle in dieselbe zweite Datensatzkennung übersetzt. Dadurch wird sichergestellt, dass die Daten, die zu ein und derselben Person gehören, in der Merkmalsdatenbank 14 auch als die Daten einer einzigen (allerdings anonymen) Person behandelt werden.

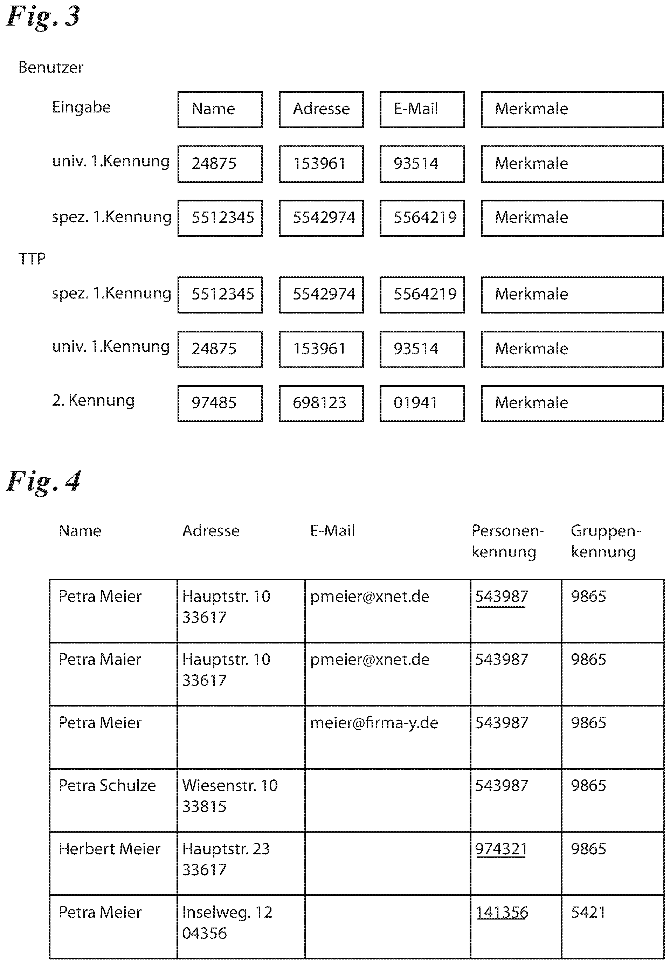

Ein Beispiel für die Anonymisierung von Identifizierungsdaten ist in Fig. 3 dargestellt. In diesem Beispiel gibt der Benutzer einen Datensatz ein, der drei Klassen von Identifzierungsdaten einer Person enthält, nämlich den Namen, die Adresse und die E-Mail-Adresse. Außerdem enthält der Datensatz ein oder mehrere Felder, in denen Merkmale der betreffenden Person angegeben sind. Der eingegebene Name, die Adresse und die E-Mail-Adresse werden dann zunächst so standardisiert, dass der Name in einem bestimmten Standardformat angegeben wird, die Adresse in einem bestimmten Standardformat und auch die E-Mail-Adresse in einem standardisierten Format. Diese standardisierten Daten werden dann mit einem Hash-Algorithmus anonymisiert. In der zweiten Zeile in Fig. 3 ist ein Zwischenergebnis dieses Algorithmus dargestellt. Aus dem Namen wird so zunächst eine universelle erste Datensatzkennung, in gezeigten Beispiel 24875. Entsprechend werden auch die Adresse und die E-Mail Adresse in universelle Datensatzkennungen 153961 und 93514 umgewandelt. Wenn mehrere Benutzer denselben Namen eingeben, so liefert der Algorithmus zunächst bei jedem Benutzer dieselbe Kennung. Deshalb werden diese Kennungen als "universell" bezeichnet. In einem zweiten Schritt wird dann die universelle Kennung in eine benutzerspezifische erste Datensatzkennung umgewandelt, beispielsweise 5512345 für den Namen, 5542974 für die Adresse und 5564219 für die E-Mail-Adresse. Diese benutzerspezifischen ersten Datensatzkennungen sind von Benutzer zu Benutzer verschieden. Im gezeigten Beispiel kennzeichnen die beiden ersten Ziffern "55" den Benutzer. Diese Kennungen bilden dann die ersten Datensatzkennungen 18, die an die Treuhandstelle (TTP) übermittelt werden. Dort wird zunächst die benutzerspezifische Kennung (vierte Zeile in Fig. 3) in die zugehörige universelle Datensatzkennung (fünfte Zeile) zurückverwandelt. Dazu benutzt die Treuhandstelle die Kenntnis über den Benutzer, der die Daten geliefert hat. Die universellen ersten Datensatzkennungen werden dann jeweils in eine zweite Datensatzkennung umgewandelt (sechste Zeile), also beispielsweise 97485 für den Namen, 698123 für die Adresse und 01941 für die E-Mail-Adresse. Diese zweiten Datensatzkennungen sind für gleiche Personen gleich, auch wenn sie von verschiedenen Benutzern stammen.

Wie in Fig. 1 durch Pfeile symbolisiert wird, werden die Identifzierungsdaten, im hier betrachteten Beispiel also der Name, die Adresse und die E-Mail-Adresse, auch als Klartext an die Verknüpfungsdatenbank 16 übermittelt. Fig. 4 zeigt ein vereinfachtes Beispiel einer solchen Verknüpfungsdatenbank. Diese Datenbank enthält die drei Felder für die Idenfizierungsdaten sowie zusätzliche Felder für Verknüpfungsdaten, im gezeigten Beispiel eine Personenkennung und eine Gruppenkennung.

Wenn mehrere Benutzer Identifizierungsdaten über dieselbe Person an die Verknüpfungsdatenbank liefern oder derselbe Benutzer zu verschiedenen Zeiten Identifizierungsdaten über dieselbe Person liefert, so können sich diese Daten leicht voneinander unterscheiden, so dass man etwas abweichende Datensätze erhält, wie in Fig. 4 illustriert ist. Beispielsweise enthalten die ersten beiden Datensätze in Fig. 4 dieselbe Adresse und dieselbe E-Mail-Adresse, doch ist der Name der Person "Petra Meier" einmal mit "ei" und einmal mit "ai" geschrieben. Es liegt auf der Hand, dass es sich hierbei nur um einen Schreibfehler handelt und dass die Datensätze in Wahrheit dieselbe Person betreffen. In der Verknüpfungsdatenbank werden auf die Datensätze verschiedene Algorithmen angewandt, mit denen solche Ähnlichkeiten erkannt werden. Das bezieht sich nicht nur auf unterschiedliche Schreibweisen bei klanglicher Übereinstimmung, sondern auch auf typische Hörfehler, typische, statistisch häufige Tippfehler beim Eintippen des Namens auf einer Schreibmaschinentastatur und dergleichen. Wenn sich dabei eine hinreichende Ähnlichkeit ergibt, es also wahrscheinlich ist, dass es sich in Wahrheit um dieselbe Person handelt, so wird zwischen den Datensätzen eine entsprechende Verknüpfung hergestellt. Dies geschieht durch Einträge in den Feldern, die die Verknüpfungsdaten enthalten. Im gezeigten Beispiel geschieht dies in der Weise, dass für jede Person eine eindeutige Personenkennung generiert wird, und wenn zwei Datensätze verknüpft sind, so wird für beide dieselbe Personenkennung eingetragen.

Entsprechende Verknüpfungen können auch aufgrund anderer Informationen erzeugt werden, die in der Verknüpfungsdatenbank verfügbar sind. Beispielsweise kann aus irgendeiner Quelle bekannt sein, dass die Person (Petra Meier) noch eine zweite E-Mail-Adresse hat, unter der sie beispielsweise im Büro erreichbar ist. Diese zweite E-Mail-Adresse ist im dritten Datensatz in Fig. 4 angegeben. Auch dieser Datensatz erhält dann dieselbe Personenkennung (543987) wie die beiden ersten Datensätze. Ebenso kann aus Einwohnermelderegistern bekannt sein, dass die betreffende Person umgezogen ist oder aufgrund einer Heirat ihnen Namen geändert hat. Im vierten Datensatz in Fig. 4 ist der Mädchenname "Petra Schulze" und eine frühere Adresse angegeben. Auch dieser Datensatz erhält dann dieselbe Personenkennung.

Im fünften Datensatz in Fig. 4 ist als Name "Herbert Meier" angegeben, und die Adresse ist die gleiche wie in den ersten vier Datensätzen. Hier liegt auf der Hand, dass es sich um den Ehemann von Frau Petra Meier handelt. Folglich erhält dieser Datensatz eine andere Personenkennung (974321).

Der letzte Datensatz in Fig. 4 enthält wieder den Namen "Petra Meier", doch ist eine völlig andere Adresse in einem anderen Ort angegeben (andere Postleitzahl). Da keine Hinweise auf einen Umzug vorliegen, muss man schließen, dass es sich hier um eine namensgleiche andere Person handelt, die folglich auch eine andere Personenkennung erhält.

Verknüpfungen können jedoch nicht nur bei Personenidentität gebildet werden, sondern auch wenn zwischen bestimmten Personen irgendwelche anderen Beziehungen bestehen, beispielsweise beide einer bestimmten Personengruppe angehören, etwa Einwohner desselben Ortes sind, in derselben Straße wohnen, und dergleichen. Im gezeigten Beispiel besteht eine solche Verknüpfung darin, dass zwei Personen demselben Haushalt angehören. Diese Verknüpfung wird dadurch ausgedrückt, dass die Personen in dem Feld "Gruppenkennung" denselben Eintrag erhalten. So haben beispielsweise Petra Meier (erster bis vierter Datensatz) und Herbert Meier (fünfter Datensatz) dieselbe Gruppenkennung (9865). Petra Meier im fünften Datensatz hat dagegen eine andere Gruppenkennung.

Es versteht sich, dass auch noch weitere Gruppenkennungen vorhanden sein können, die auch eine Hierarchie bilden können, beispielsweise "gleicher Haushalt", "gleiche Straße", "gleicher Stadtbezirk", "gleicher Wohnort" etc.. Ebenso versteht es sich, dass die Verwendung von Personen- und Gruppenkennungen nur ein Weg sind, Verknüpfungen zwischen den Datensätzen zum Ausdruck zu bringen. Alternativ könnte ein Verknüpfungsfeld auch lauten "identisch Petra Meier, Hauptstr. 10, Berlin", "gleicher Haushalt wie ..." etc....

Formal können diese Verknüpfungsdaten so behandelt werden wie die Merkmale in den von den Benutzern eingegebenen Datensätzen (Fig. 3).

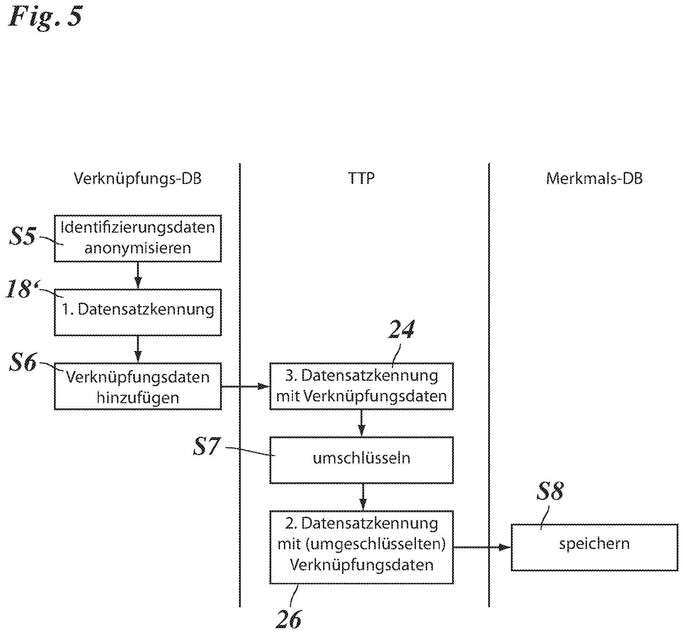

Fig. 5 illustriert ein Verfahren, mit dem die Verknüpfungsdaten anonym an die Merkmalsdatenbank übermittelt werden können. Das Verfahren ist analog zu dem in Fig. 2 gezeigten Verfahren zur Übermittlung der Merkmalsdaten. In Schritt S5 werden die Identifizierungsdaten (Felder 1 bis 3 der Verknüpfungsdatenbank) anonymisiert, und es werden entsprechende dritte Datensatzkennungen 18' generiert. Aus der Sicht der Treuhandstelle (TTP) kann die Verknüpfungsdatenbank wie ein "Benutzer" behandelt werden. Die dritten Datensatzkennungen sind somit benutzerspezifisch.

In Schritt S6 werden dann die Verknüpfungsdaten hinzugefügt, im gezeigten Beispiel also die Personenkennung und die Gruppenkennung. Es versteht sich, dass diese Kennungen anonym sind, also nicht die unmittelbare Identifizierung der betreffenden Person ermöglichen.

Die dritte Datensatzkennung 18' mit den Verknüpfungsdaten wird dann an die Treuhandstelle übermittelt und dort als ein Datensatz 24 gespeichert. Dabei wird die benutzerspezifische dritte Datensatzkennung wieder in eine universelle dritte Datensatzkennung zurückverwandelt.

In Schritt S7 wird dann die (benutzerspezifische) dritte Datensatzkennung mit einem symmetrischen Schlüssel umgeschlüsselt und man erhält einen Datensatz 26 mit der zweiten Datensatzkennung und den Verknüpfungsdaten.

In dem hier betrachteten Beispiel werden auch die Verknüpfungsdaten, speziell die Personenkennungen, mit einem symmetrischen Schlüssel umgeschlüsselt. In Schritt S8 wird dann die zweite Datensatzkennung mit den Verknüpfungsdaten an die Merkmalsdatenbank übermittelt und dort gespeichert. Da auch die Personenkennungen umgeschlüsselt werden, ist sichergestellt, dass die Identität der Person auch dann nicht festgestellt werden kann, wenn die Betreiber der Verknüpfungsdatenbank und der Merkmalsdatenbank kooperieren.

In der Merkmalsdatenbank 14 können nun aufgrund der Verknüpfungsdaten Datensätze, die sich auf dieselbe Person beziehen, zusammengeführt werden, auch wenn sich die entsprechenden Identifizierungsdaten und damit auch die entsprechenden zweiten Datensatzkennungen unterscheiden. Dadurch kann die Qualität der statistischen Analysen verbessert werden, ohne dass die wahre Identität der betreffenden Personen preisgegeben werden muss.

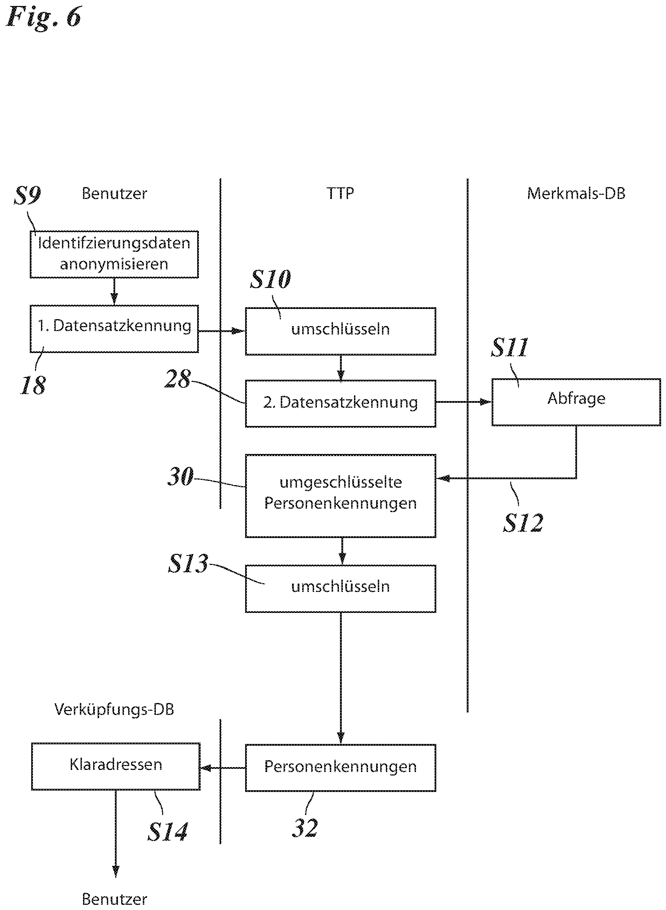

Fig. 6 illustriert ein Verfahren, mit dem die Ergebnisse einer solchen statistischen Analyse der in der Merkmalsdatenbank gespeicherten Merkmale wieder verfügbar gemacht werden können. Als Beispiel wird angenommen, dass einer der Benutzer der Merkmalsdatenbank den Auftrag erteilt, nach Personen zu suchen, die ein ähnliches Merkmalsprofil aufweisen wie eine bestimmte, dem Benutzer bekannte Person, deren Daten zu diesem Zweck an die Merkmalsdatenbank übermittelt werden. In Schritt S9 werden auf Seiten des Benutzers die Identifizierungsdaten dieser Person anonymisiert, so dass man entsprechende erste Datensatzkennungen 18 erhält. Dieser Schritt entspricht dem Schritt S1 in Fig. 2.

In Schritt S10 werden die Daten an die Treuhandstelle übermittelt und dort umgeschlüsselt, so dass man eine zweite Datensatzkennung 28 erhält. Es wird hier angenommen, dass der Benutzer die Merkmale der betreffenden Person bereits früher an die Merkmalsdatenbank übermittelt hatte, so dass eine nochmalige Übermittlung der Merkmale nicht erforderlich ist.

In Schritt S11 wird dann in der Merkmalsdatenbank eine statistische Analyse durchgeführt, um Personen (anhand ihrer zweiten Datensatzkennung) zu identifizieren, die ein ähnliches Merkmalsprofil haben. Für jede dieser Personen ist in der Merkmalsdatenbank zuvor eine umgeschlüsselte Personenkennung gespeichert worden (Schritte S7 und S8 in Fig. 5). Diese umgeschlüsselten Personenkennungen 30 werden nun in Schritt S12 an die Treuhandstelle gemeldet und dort in Schritt S13 zurückgeschlüsselt, so dass man einen Satz von unverschlüsselten Personenkennungen 32 erhält. Diese werden in Schritt S14 an die Verknüpfungsdatenbank übermittelt, die daraus die entsprechenden Klaradressen bildet und an den Benutzer (Auftraggeber) weiterleitet.

In diesem Beispiel erlauben es die in der Merkmalsdatenbank gespeicherten umgeschlüsselten Personenkennungen, die bei der Analyse ermittelten Personen zu identifizieren. Alternativ könnte die Merkmalsdatenbank auch die zweiten Datensatzkennungen der ermittelten Personen an die Treuhandstelle übermitteln, die diese wieder in die dritten Datensatzkennungen umschlüsselt. In der Verknüpfungsdatenbank können dann diese dritten Datensatzkennungen mit den Kennungen verglichen werden, die man durch Anonymisierung der gespeicherten Identifizierungsdaten erhält. Bei Übereinstimmung wird dann die entsprechende Klaradresse an den Auftraggeber übermittelt.

Es sind jedoch auch Anwendungsfälle denkbar, in denen der Auftraggeber keine Klaradressen wünscht, sondern lediglich ein anonymes Analyseergebnis zu einer bestimmten Fragestellung. In dem Fall könnte das Analyseergebnis direkt von der Merkmalsdatenbank an den Benutzer übermittelt werden.

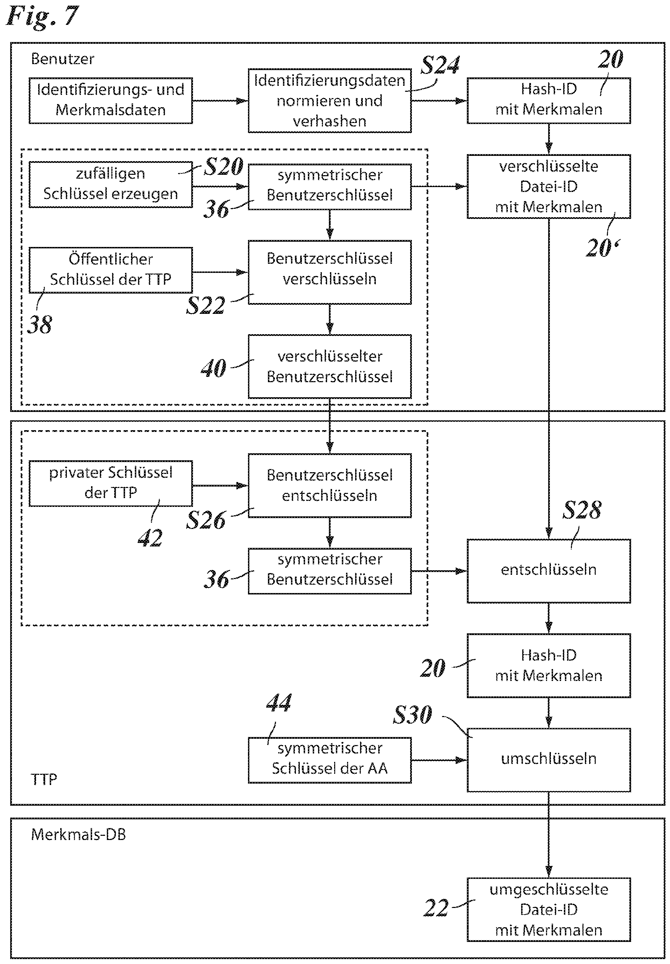

Der Datenverkehr zwischen den Benutzern 10, 11 und der Treuhandstelle 12, der Verknüpfungsdatenbank 16 und der Treuhandstelle, und zwischen der Treuhandstelle und der Merkmalsdatenbank 14 erfolgt vorzugsweise verschlüsselt. Fig. 7 illustriert stellvertretend ein Verschlüsselungsschema für die Übermittlung von Merkmalsdaten von einem Benutzer an die Merkmalsdatenbank 14.

Zweckmäßigerweise wird der Benutzer nicht jeden Datensatz 20 (Fig. 2) einzeln an die Treuhandstelle 12 übermitteln, sondern er wird eine Vielzahl von Datensätzen als "Batch" übermitteln. Es wird deshalb im folgenden davon ausgegangen, dass die dem Benutzer zur Verfügung gestellte Software in der Lage ist, die ersten Datensatzkennungen 18 und die zugehörigen Merkmale für mehrere Personen temporär in einem nichtflüchtigen Speicher zu speichern und dann gesammelt an die Treuhandstelle zu übermitteln.

Während für die Verschlüsselung der ersten Datensatzkennung 18 und für die Umschlüsselung in die zweite Datensatzkennung 24 symmetrische Schlüssel benutzt werden, erfolgt die Übermittlung dieser symmetrischen Schlüssel an die Treuhandstelle 12 nach einem asymmetrischen Verschlüsselungsverfahren mit öffentlichem und privatem Schlüssel. Gemäß Fig. 7 erzeugt der Benutzer in einem Schritt S20 einen zufälligen Schlüssel, der dann als symmetrischer Benutzerschlüssel 36 für das gesamte Batch dient. Mit Hilfe eines von der Treuhandstelle 12 publizierten öffentlichen Schlüssels 38 wird dann in Schritt S22 der Benutzerschlüssel 36 noch einmal verschlüsselt, so dass man einen verschlüsselten Benutzerschlüssel 40 erhält, der dann an die Treuhandstelle 12 (TTP) übermittelt wird.

Für jeden einzelnen Datensatz werden in einem Schritt S24 die Identifizierungsdaten standardisiert und verhasht und so der Datensatz 20 erzeugt, der die erste Datensatzkennung (auch als Hash-ID bezeichnet) und die zugehörigen Merkmale enthält. Mit Hilfe des symmetrischen Benutzerschlüssels 36 wird dieser Datensatz oder zumindest die Hash-ID verschlüsselt. Auf diese Weise erhält man einen verschlüsselten Datensatz 20' mit der verschlüsselten Datensatzkennung und den Merkmalen. In diesem Beispiel wird angenommen, dass die Verschlüsselung nur auf die Datensatzkennung wirkt. Wahlweise könnte die Verschlüsselung jedoch auch auf die Merkmale wirken.

Dieser verschlüsselte Datensatz 20' wird dann an die Treuhandstelle 12 übermittelt. Entsprechend verfährt man mit sämtlichen Datensätzen des Batches.

Auf Seiten der Treuhandstelle 12 wird dann ein privater Schlüssel 42 der Treuhandstelle benutzt, um in einem Schritt S26 den Benutzerschlüssel wieder zu entschlüsseln und so den symmetrischen Benutzerschlüssel 36 zurückzugewinnen, der dann für das gesamte Batch benutzt werden kann. In einem Schritt S28 werden dann die verschlüsselten Datensätze 20' entschlüsselt, und man erhält wieder die Datensätze 20, bestehend aus Hash-ID und Merkmalen.

Mit Hilfe eines symmetrischen Schlüssels 44 des Betreibers der Merkmalsdatenbank 14 wird dann in Schritt S30 der Datensatz 20 umgeschlüsselt, so dass man den Datensatz 22 erhält, der die zweite Datensatzkennung (umgeschlüsselte Datei-ID) und die Merkmale enthält. Dieser Datensatz wird dann an die Analyse-Agentur übermittelt und in der Merkmalsdatenbank 14 gespeichert. Der symmetrische Schlüssel 44 der Merkmalsdatenbank 14 kann ebenfalls mit Hilfe von asymmetrischer Verschlüsselung an die Treuhandstelle 12 übermittelt werden.

## Patentansprüche

1. Verfahren zum anonymen Zusammenführen von vertraulichen Daten und zugehörigen Identifizierungsdaten von Personen, bei dem je Datensatz die folgenden Schritte ausgeführt werden:
- auf Seiten eines Benutzers (10, 11):
- Umwandeln der Identifizierungsdaten in eine erste Datensatzkennung (18) und
- übermitteln der ersten Datensatzkennung zusammen mit den vertraulichen Daten an eine Treuhandstelle (12),
- auf Seiten der Treuhandstelle:
- umschlüsseln der ersten Datensatzkennung (18) mit einem symmetrischen Schlüssel in eine zweite Datensatzkennung (22) und
- übermitteln der zweiten Datensatzkennung zusammen mit den vertraulichen Daten an eine Merkmalsdatenbank (14),
wobei die Identifizierungsdaten auch in einer Verknüpfungsdatenbank (16) gespeichert werden, zusammen mit Verknüpfungsdaten, die Beziehungen zwischen Identifizierungsdaten aus verschiedenen Datensätzen angeben, einschließlich Verknüpfungsdaten, die angeben, dass die von einander verschiedenen Identifizierungsdaten zweier verschiedener Datensätze dieselbe Person betreffen, oder die angeben, dass zwischen den zu verschiedenen Datensätzen gehörenden Personen eine bestimmte Beziehung besteht, und dass zusätzlich die folgenden Schritte ausgeführt werden:
- auf Seiten der Verknüpfungsdatenbank:
- Umwandeln der Identifizierungsdaten in eine dritte Datensatzkennung (18'), derart, dass die dritte Datensatzkennung implizit die erste Datensatzkennung (18) für dieselben Identifizierungsdaten enthält, und
- übermitteln der dritten Datensatzkennung zusammen mit den Verknüpfungsdaten an die Treuhandstelle (12)
- auf Seiten der Treuhandstelle:
- umschlüsseln der dritten Datensatzkennung (18') in die zweite Datensatzkennung und
- übermitteln der zweiten Datensatzkennung zusammen mit den Verknüpfungsdaten an die Merkmalsdatenbank (14).

2. Verfahren nach Anspruch 1, bei dem die Umwandlung der Identifizierungsdaten in die erste Datensatzkennung (18) durch Einweg-Verschlüsselung erfolgt.

3. Verfahren nach Anspruch 1 oder 2, für mehrere Benutzer (10), **dadurch gekennzeichnet, dass** jeder Benutzer (10) einen eigenen Kreis von nur ihm zur Verfügung stehenden ersten Datensatzkennungen (18) erhält.

4. Verfahren nach einem der vorstehenden Ansprüche, bei dem die erste Datensatzkennung (18) mit einem symmetrischen Schlüssel (36) verschlüsselt an die Treuhandstelle (12) übermittelt wird.

5. Verfahren nach Anspruch 4, bei dem der symmetrische Schlüssel (36) noch einmal mittels eines öffentlichen Schlüssels (38) der Treuhandstelle (12) asymmetrisch verschlüsselt und in dieser Form an die Treuhandstelle (12) übermittelt wird.

6. Verfahren nach einem der vorstehenden Ansprüche, bei dem die Beziehung zwischen den zu verschiedenen Datensätzen gehörenden Personen eine Zugehörigkeit zu einer gemeinsamen Personengruppe ist.

7. Verfahren nach Anspruch 6, bei dem die Verknüpfungsdaten die gemeinsame Zugehörigkeit der zu mehreren Datensätzen gehörenden Personen zu einer oder mehreren Gruppen in einer Hierarchie von Personengruppen angeben.

## Claims

1. Method for anonymous compiling of confidential data and related identification data of persons, wherein the following steps are carried out per data record:
- on behalf of a user (10, 11):
- converting the identification data into a first record identifier (18) and
- transmitting the first record identifier together with the confidential data to a trusted third party (12),
- on behalf of the trusted third party:
- re-encrypting the first record identifier (18) into a second record identifier (22) by means of a symmetric key, and
- transmitting the second record identifier together with the confidential data to a feature database (14),
wherein the identification data are also stored in a linking database (16), together with link data that indicate relations between identification data of different records, including link data that specify that the identification data of two different data records, which identification data are different from one another, refer to the same person, or which specify that a certain relation exists between persons associated with the different data records, and the following additional steps are carried out:
- on behalf of the linking database:
- converting the identification data into a third record identifier (18') such that the third record identifier implicitly includes the first record identifier (18) for the same identification data, and
- transmitting the third record identifier to the trusted third party (12) together with the link data,
- on behalf of the trusted third party:
- re-encrypting the third record identifier (18') into the second record identifier, and
- transmitting the second record identifier to the feature database (14) together with the link data .

2. The method according to claim 1, wherein the conversion of the identification data into the first record identifier (18) is achieved by one-way encryption.

3. The method according to claim 1 or 2, for a plurality of users (10), **characterised in that** each user (10) has an own set of first record identifiers (18) which is available only for that user.

4. The method according to any of the preceding claims, wherein the first record identifier (18) is transmitted to the trusted third party in an encrypted form, encrypted with a symmetric key (36).

5. The method according to claim 4, wherein the symmetric key (36) is encrypted once more asymmetrically by means of a public key (38) of the trusted third party (12) and is transmitted to the trusted third party (12) in this form.

6. The method according to any of the preceding claims, wherein the relation between the persons associated with different data records is a status of membership to a common group of persons.

7. The method according to claim 6, wherein the link data indicate the common membership of the persons associated with a plurality of data records to one or more groups in a hierarchy of groups of persons.

## Revendications

1. Procédé de collecte anonyme de données confidentielles et de données d'identification associées concernant des personnes, dans lequel les étapes suivantes sont exécutées pour chaque ensemble de données :
- du côté d'un utilisateur (10, 11) :
- convertir les données d'identification en un premier identifiant d'ensemble de données (18) et
- transmettre à un tiers de confiance (12) le premier identifiant d'ensemble de données associé aux données confidentielles,
- du côté du tiers de confiance :
- crypter le premier identifiant d'ensemble de données (18) avec une clé symétrique dans un deuxième identifiant d'ensemble de données (22), et
- transmettre à une base de données de caractéristiques (14) le deuxième identifiant d'ensemble de données associé aux données confidentielles,
dans lequel les données d'identification sont également enregistrées dans une base de données de liaison (16), en association avec des données de liaison qui indiquent des relations entre des données d'identification issues de différents ensembles de données, y compris des données de liaison qui indiquent que les données d'identification différentes les unes des autres de deux ensembles de données différents concernent la même personne, ou qui indiquent qu'il existe une relation déterminée entre les personnes appartenant à différents ensembles de données, et les étapes suivantes sont en outre exécutées :
- du côté de la base de données de liaison :
- convertir les données d'identification en un troisième identifiant d'ensemble de données (18') de telle sorte que le troisième identifiant d'ensemble de données contient implicitement le premier identifiant d'ensemble de données (18) pour les mêmes données d'identification, et
- transmettre au tiers de confiance (12) le troisième identifiant d'ensemble de données associé aux données de liaison,
- du côté du tiers de confiance :
- crypter le troisième identifiant d'ensemble de données (18') dans le deuxième identifiant d'ensemble de données et
- transmettre à la base de données de caractéristiques (14) le deuxième identifiant d'ensemble de données associé aux données de liaison.

2. Procédé selon la revendication 1, dans lequel la conversion des données d'identification dans le premier identifiant d'ensemble de données (18) s'effectue par cryptage unidirectionnel.

3. Procédé selon la revendication 1 ou 2, pour plusieurs utilisateurs (10), **caractérisé en ce que** chaque utilisateur (10) reçoit son propre groupe de premiers identifiants d'ensemble de données (18) tenus uniquement à sa disposition.

4. Procédé selon l'une des revendications précédentes, dans lequel le premier identifiant d'ensemble de données (18) crypté avec une clé symétrique (36) est transmis au tiers de confiance (12).

5. Procédé selon la revendication 4, dans lequel la clé symétrique (36) est de nouveau cryptée de manière asymétrique au moyen d'une clé publique (38) du tiers de confiance (12) et est transmise sous cette forme au tiers de confiance (12).

6. Procédé selon l'une des revendications précédentes, dans lequel la relation entre les personnes appartenant à différents ensembles de données est une appartenance à un groupe de personnes commun.

7. Procédé selon la revendication 6, dans lequel les données de liaison indiquent l'appartenance commune des personnes appartenant à plusieurs ensembles de données, à un ou plusieurs groupes dans une hiérarchie de groupes de personnes.
